Europäisches Patentamt

European Patent Office

Office européen des brevets

(11) Publication number: 0 639 426 A1

# EUROPEAN PATENT APPLICATION
## published in accordance with Art. 158(3) EPC

㉑ Application number: 94905852.3

㉒ Date of filing: 04.02.94

(86) International application number:
PCT/JP94/00172

㊧ International publication number:
WO 94/20257 (15.09.94 94/21)

(51) Int. Cl.⁶: B23K 35/26

㉚ Priority: 03.03.93 JP 67552/93

㊸ Date of publication of application:
22.02.95 Bulletin 95/08

㊴ Designated Contracting States:
DE FR GB

㉛ Applicant: NIHON ALMIT KABUSHIKI KAISHA
Miyata Building 6F
38, 1-chome Yoyogi
Shibuya-ku
Tokyo 151 (JP)

㉜ Inventor: KAWAGUCHI, Toranosuke
Nihon Almit Co. Ltd.,
38, Yoyogi 1-chome
Shibuya-ku,
Tokyo 151 (JP)
Inventor: HAYASHI, Takayuki

Nihon Almit Co. Ltd.,
38, Yoyogi 1-chome
Shibuya-ku,
Tokyo 151 (JP)
Inventor: ROBEEN, Gene
Nihon Almit Co. Ltd.,
38, Yoyogi 1-chome
Shibuya-ku,
Tokyo 151 (JP)
Inventor: HIYAMA, Reiko
Nihon Almit Co. Ltd.,
38, Yoyogi 1-chome
Shibuya-ku,
Tokyo 151 (JP)

㉝ Representative: Casalonga, Axel et al
BUREAU D.A. CASALONGA - JOSSE
Morassistrasse 8
D-80469 München (DE)

㊹ HIGH-STRENGTH SOLDERING ALLOY.

㊽ A high-strength soldering alloy exhibiting high mechanical strengths and high toughness even under severe conditions. The alloy comprises 0.8-7.0 wt. % of Ag and Ge in total (both of Ag and Ge being contained in an amount of greater than 0 wt. %), 0-3.0 wt. % of Sb, 0-3.0 wt. % of Bi, 30-70 wt. % of Sn, 0-2.5 wt. % of In, and the balance comprising Pb.

Technical Field

The present invention relates to high strength solder alloy which can be used for soldering in a process of manufacturing a machine, a device, and so on which is used under severe conditions.

Background Technology

Sn - Pb alloy has been used for soldering of conductive parts in a process of manufacturing electronic parts and devices, but such Sn - Pb alloy is unsatisfactory for soldering of parts and devices which are used particularly under severe conditions. For example, some automobile parts are possibly used between a high temperature such as 150 °C and a low temperature such as minus 50 °C. Therefore the development of new solder alloy which can be used under such a severe condition has been required.

In case conventional Sn - Pb solder alloy is used under such a severe condition, the internal stress caused by the difference between the coefficient of thermal expansion of the solder alloy and that of the material of the parts joined by soldering is generated and extinguished alternately and repeatedly resulting in the occurrence of fatigue phenomenon which finally causes a crack. In order to prevent the generation of such a crack, it is necessary to raise the strength of solder alloy. It is particularly noteworthy that the mechanical property of solder alloy is lowered remarkably between 100°C and 150°C in utility temperature.

As described above, solder alloy having such high mechanical strength that can withstand severe utility conditions is required as solder alloy which is to be used in the future. Accordingly, high tensile strength is naturally required as a mechanical property of solder alloy, but high toughness is also required as an important property of solder alloy at the same time.

Furthermore low melting point is also required for solder alloy. It is generally thought that a precondition of basic metal for solder alloy of low melting point is Sn - Pb eutectic alloy (183°C in eutectic temperature), because even if new solder alloy is invented as a result of investigation, when the soldering work by using the new solder alloy is remarkably different from that by using conventional solder alloy, there arises a new problem in practical use.

Thus the purpose of the present invention is to propose high strength solder alloy having high mechanical strength and high toughness which can withstand severe conditions.

Disclosure of the Invention

The high strength solder alloy according to the present invention is characterized in that it comprises Ag and Ge of 0.8 to 7.0 or less weight% in total (each of Ag and Ge is more than 0 weight%), Sb of 0 to 3.0 or less weight%, Bi of 0 to 3.0 or less weight %, Sn of 30 to 70 or less weight %, In of 0 to 2.5 or less weight % and Pb of residual weight %.

We selected conventional Sn - Pb eutectic alloy as basic metal for solder alloy according to the present invention and added to this Ge, Ag, Bi, and Sb of proper adding range for each to prepare test pieces of alloys of different contents. We measured tensile strength(kgf/mm$^2$), elongation (% ) and soldering characteristic for each of these alloys and studied whether each of these alloys could attain the purpose of the present invention or not.

As a result of the above tests on multicomponent solder alloys which comprise Sn, Pb, Ge, Bi, Sb, In and Ag, we has come to the conclusion that the solder alloy comprising Ag and Ge of 0.8 to 7.0 or less weight % in total (each of Ag and Ge is more than 0 weight% ), Sb of 0 to 3.0 or less weight % , Bi of 0 to 3.0 or less weight% , Sn of 30 to 70 or less weight % , In of 0 to 2.5 or less weight% and Pb of the residual weight% can attain the above purpose.

Thus the present invention has an effect on the increase of the mechanical strength and the toughness of the solder alloy for enabling its use even under severe conditions.

Conditions for Working the Invention

We describe below the present invention according to some embodiments.

The strength of soft material such as solder alloy changes as expanding velocity changes.

As the tensile strength of solder alloy comprising Sn of 60 weight% and Pb of 40 weight% which has been used popularly of late changes according to the expanding velocity, the expanding velocity in our tests is uniformly 10 mm/min.

Table 1 below shows particularly hopeful solder alloys and their measured properties obtained through tension tests at the normal temperature, the above hopeful solder alloys being selected solder alloys comprising Ag and Ge of 0.8 to 7.0 or less weight% in total (each of Ag and Ge is more than 0 weight% ), Sb of 0 to 3.0 or less weight% , Bi of 0 to 3.0 or less weight % , Sn of 30 to 70 or less weight% , In of 0 to 2.5 or less weight% and Pb of the residual weight% , and the above measured properties being tensile strength ( $kgf/mm^2$) and elongation (% ).

Of course the synergism brought about by plural components added to the basic metal is remarkable in comparison with the effect brought about by a single component and particularly the synergism brought about by two components Ge and Ag added to the basic metal is noteworthy. This fact is shown in Table 2 below.

Table 2 below shows the synergism brought about by Ag and Ge added to the basic metal (Sn of 60 weight% and Pb of 40 weight % ).

The tensile strength of conventional solder alloy comprising Sn of 60 weight% and Pb of 40 weight% which is used popularly is 3.2 $kgf/mm^2$ , while the tensile strength of the solder alloy with Ag and Ge (1.1 to 3.3 weight% in total) added to the basic metal is 4.6 to 4.9 $kgf/mm^2$ which is about 50 % higher than that of the conventional solder alloy.

Furthermore, as a result of our experiments, the tensile strength and the elongation of the solder alloy with Sb and Bi added to the above content, namely comprising finally Ge of 0.2 weight% , Ag of 2.1 weight% , Sb of 1 weight% , Bi of 1 weight% , Sn of 60 weight % and Pb of the residual weight% , are 6.4 $kgf/mm^2$ which nearly doubles that of the conventional solder alloy (test piece no.1 : Sn of 60 weight% and Pb of 40 weight% ) and 31.5% respectively. In case In is added to the above solder alloy, the expansibility of the solder alloy is promoted. It is a strong point of the solder alloy according to the present invention.

As a result of checking the soldering characteristics of solder alloys with particularly excellent mechanical properties selected from those shown in Table 1, for example test piece nos. 25 and 26, it is clarified that these solder alloys have sufficient soldering characteristics even under such working conditions as in a conventional soldering process.

By adding Si of 0.005 to 2.0 weight % to the solder alloys shown in the above embodiments, the soldering wetness in particular can be raised.

[ Table 1 ]   The composition (weight % ) and the mechanical property
of the solder alloy

| T.P. No. | S n wt% | P b wt% | A g wt% | B i wt% | G e wt% | S b wt% | I n wt% | Tsl.st. kgf/mm² | El. % |
|---|---|---|---|---|---|---|---|---|---|
| 1 | 60 | 38.9 | 1 | | 0.1 | | | 4.6 | 76 |
| 2 | 60 | 37.9 | 1 | 1 | 0.1 | | | 4.8 | 79 |
| 3 | 60 | 35.9 | 1 | 3 | 0.1 | | | 4.9 | 80 |
| 4 | 60 | 36.9 | 3 | | 0.1 | | | 4.6 | 108 |
| 5 | 60 | 35.9 | 3 | 1 | 0.1 | | | 5.2 | 76 |
| 6 | 60 | 33.9 | 3 | 3 | 0.1 | | | 5.3 | 73 |
| 7 | 60 | 38.7 | 1 | | 0.3 | | | 4.5 | 148 |
| 8 | 60 | 37.7 | 1 | 1 | 0.3 | | | 4.8 | 104 |
| 9 | 60 | 35.7 | 1 | 3 | 0.3 | | | 4.9 | 106 |
| 1 0 | 60 | 36.7 | 3 | | 0.3 | | | 4.9 | 79 |
| 1 1 | 60 | 35.7 | 3 | 1 | 0.3 | | | 5.6 | 67 |
| 1 2 | 60 | 33.7 | 3 | 3 | 0.3 | | | 5.5 | 94 |
| 1 3 | 60 | 37.1 | 2.1 | 0.5 | 0.3 | | | 5.3 | 55 |
| 1 4 | 60 | 36.6 | 2.1 | 1 | 0.3 | | | 5.7 | 38 |
| 1 5 | 60 | 35.6 | 2.1 | 2 | 0.3 | | | 5.3 | 48 |
| 1 6 | 60 | 37.2 | 2.1 | 0.5 | 0.2 | | | 5.3 | 54 |
| 1 7 | 60 | 36.7 | 2.1 | 1 | 0.2 | | | 5.5 | 61 |

| | | | | | | | | | |
|---|---|---|---|---|---|---|---|---|---|
| 1 8 | 60 | 35.7 | 2.1 | 2 | 0.2 | | | 4.9 | 71 |
| 1 9 | 60 | 36.9 | 2.1 | 1 | | | | 5.7 | 37 |
| 2 0 | 60 | 36.6 | 2.1 | 1 | | 0.3 | | 5.4 | 61 |
| 2 1 | 60 | 36.4 | 2.1 | 1 | | 0.5 | | 5.5 | 42 |
| 2 2 | 60 | 35.9 | 2.1 | 1 | | 1 | | 5.9 | 40 |
| 2 3 | 60 | 36.4 | 2.1 | 1 | 0.2 | 0.3 | | 5.8 | 47 |
| 2 4 | 60 | 36.2 | 2.1 | 1 | 0.2 | 0.5 | | 6.3 | 20 |
| 2 5 | 60 | 35.7 | 2.1 | 1 | 0.2 | 1 | | 6.4 | 31 |
| 2 6 | 61.4 | 35.6 | 2 | 1 | | | | 5.6 | 50 |
| 2 7 | 61.4 | 35.6 | 2 | | | 1 | | 5.8 | 42 |
| 2 8 | 60.6 | 35.2 | 2 | 1 | 0.2 | 1 | | 6.4 | 47 |
| 2 9 | 60 | 35.8 | 2 | 1 | 0.2 | 1 | | 5.9 | 55 |
| 3 0 | 62 | 34 | 2 | 1 | | 1 | | 5.8 | 68 |
| 3 1 | 62 | 33.8 | 2 | 1 | 0.2 | 1 | | 6.8 | 38 |
| 3 2 | 62 | 33.7 | 2 | 1 | 0.3 | 1 | | 6.2 | 54 |
| 3 3 | 62 | 32.7 | 2 | 1 | 0.3 | 1 | 1 | 6.5 | 54 |
| conv | 60 | 40.0 | − | − | − | − | − | 3.2 | 195 |

Remarks :

T.P.No. means test piece no., wt% means weight% , Tsl.st. means tensile strength, El. means elongation and conv. means conventional example.

5

Table 2

| The synergism of Ag and Ge (basic metal:Sn of 60wt.%, Pb of the residual wt.% ) | | | | |
|---|---|---|---|---|
| T.P.No. | Ag | Ge | Tsl.st. | El. |
| | wt % | wt % | (kgf/mm$^2$ ) | % |
| 2 | 1 | 0.1 | 4.6 | 77 |
| 5 | 3 | 0.1 | 4.6 | 108 |
| 8 | 1 | 0.3 | 4.5 | 149 |
| 11 | 3 | 0.3 | 4.9 | 79 |
| conv. | Sn wt % | Pb wt % | | |
| conv. | 60 | 40 | 3.2 | 195 |
| Remarks :<br>T.P.No. means test piece no., wt % means weight % , Tsl.st. means tensile strength, El. means elongation and conv. means conventional example. | | | | |

## Claims

1. High strength solder alloy characterized in that it comprises Ag and Ge of 0.8 to 7.0 or less weight% in total (each of Ag and Ge is more than 0 weight% ), Sb of 0 to 3.0 or less weight% , Bi of 0 to 3.0 or less weight% , Sn of 30 to 70 or less weight % , In of 0 to 2.5 or less weight% and Pb of the residual weight% .

2. High strength solder alloy as claimed in claim 1 wherein Si of 0.005 to 2.0 weight % is added.

| International application No. |
| --- |
| PCT/JP94/00172 |

## A. CLASSIFICATION OF SUBJECT MATTER

Int. Cl$^5$  B23K35/26

According to International Patent Classification (IPC) or to both national classification and IPC

## B. FIELDS SEARCHED

Minimum documentation searched (classification system followed by classification symbols)

Int. Cl$^5$  B23K35/22-35/34

Documentation searched other than minimum documentation to the extent that such documents are included in the fields searched

Jitsuyo Shinan Koho          1926 - 1994
Kokai Jitsuyo Shinan Koho    1971 - 1994

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
| --- | --- | --- |
| Y | JP, A, 2-187295 (Nihon Almit Co., Ltd.), July 23, 1990 (23. 07. 90), (Family: none) | 1-2 |
| Y | JP, A, 61-82994 (Nippon Handa Kogyo K.K.), April 26, 1986 (26. 04. 86), (Family: none) | 1-2 |
| Y | JP, A, 2-75493 (Fujitsu Ltd.), March 15, 1990 (15. 03. 90), (Family: none) | 1-2 |
| A | JP, A, 62-72496 (Matsuo Handa K.K.), April 3, 1987 (03. 04. 87), (Family: none) | 1-2 |
| A | JP, A, 61-273296 (Taruchin K.K.), December 3, 1986 (03. 12. 86), (Family: none) | 1-2 |
| A | JP, B2, 3-28996 (Taruchin K.K.), April 22, 1991 (22. 04. 91), (Family: none) | 1-2 |

☐  Further documents are listed in the continuation of Box C.          ☐  See patent family annex.

* Special categories of cited documents:
"A"  document defining the general state of the art which is not considered to be of particular relevance
"E"  earlier document but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
| --- | --- |
| April 13, 1994 (13. 04. 94) | May 10, 1994 (10. 05. 94) |

| Name and mailing address of the ISA/ | Authorized officer |
| --- | --- |
| Japanese Patent Office |  |
| Facsimile No. | Telephone No. |

Form PCT/ISA/210 (second sheet) (July 1992)